Europäisches Patentamt

European Patent Office

Office européen des brevets

(11) Publication number: **0 455 292 A1**

# EUROPEAN PATENT APPLICATION

(21) Application number: **91200985.9**

(22) Date of filing: **25.04.91**

(51) Int. Cl.⁵: **A47J 31/057, A47J 31/06**

(30) Priority: **02.05.90 NL 9001045**

(43) Date of publication of application:
**06.11.91 Bulletin 91/45**

(84) Designated Contracting States:
**DE FR SE**

(71) Applicant: **N.V. Philips' Gloeilampenfabrieken**
**Groenewoudseweg 1**
**NL-5621 BA Eindhoven(NL)**

(72) Inventor: **van de Gang, Harold Paul**
**c/o INT. OCTROOIBUREAU B.V., Prof.**
**Holstlaan 6**
**NL-5656 AA Eindhoven(NL)**

(74) Representative: **Bos, Kornelis Sjoerd et al**
**INTERNATIONAAL OCTROOIBUREAU B.V.**
**Prof. Holstlaan 6**
**NL-5656 AA Eindhoven(NL)**

(54) **Apparatus for preparing hot beverages.**

(57) An apparatus for preparing hot beverages, such as coffee and tea, which apparatus comprises a filtering device (5) with a filter space (8), a receptacle (10) for hot water arranged above the filtering device, and a siphon device (11) for siphoning water from the receptacle (10) to the filter space (8). In order to increase the temperature of the water which is siphoned to the filter space the receptacle (10) is provided with a by-pass duct (21) which discharges adjacent the filter space (8) and through which the comparatively cold water at the beginning of the preparation process is fed. As a result of this only the subsequently supplied hot water is siphoned to the filter space and is used for the filtering process.

FIG.2

EP 0 455 292 A1

The invention relates to an apparatus for preparing hot beverages, such as coffee and tea, which apparatus comprises a housing, a water reservoir, a filtering device having a filter holder with a filter space, a flow heater for heating and conveying water from the water reservoir to the filtering device, a receptacle for hot water, which receptacle can be placed above the filtering device, and a siphon device with an inlet pipe section and an outlet pipe section, a lower rim of the inlet pipe section being disposed on a bottom of the receptacle, and the outlet pipe section discharging above the filter space.

Such an apparatus is known from DE-U-7,811,283.

In many coffee-makers operating in accordance with the flow-heating principle the problem occurs that the temperature of the water when it reaches the ground coffee is too low and thereby adversely affects the flavour of the coffee. At the beginning of the coffee-making process this temperature is even very low because the first water comes from the pipe section downstream of the flow heater and is conveyed to the ground coffee as cold water. In DE-U-7,811,283 this problem is solved by arranging a receptacle above the filter holder and emptying this receptacle periodically by means of a siphon device. In particular at the beginning of the coffee-making process the comparatively cold first water is then mixed with the subsequently hot water. Since initially the heat transfer to the entire filter device, including the receptacle, is substantial the temperature is in fact still too low. For this purpose the receptacle in accordance with DE-U-7,811,283 is additionally heated by means of a separate heating element.

It is the object of the invention to make the temperature of the water flowing to the ground coffee as high as possible and, in addition, to minimize the contact time, i.e. the time during which the hot water is in contact with the ground coffee (the actual filtering time).

To this end the apparatus for preparing hot beverages is characterized in that the receptacle is provided with a by-pass duct which discharges adjacent the filter space and whose passage is dimensioned in such a way that the amount of water supplied to the receptacle per unit of time is larger that the amount of water discharged by the by-pass duct, and the lower part of the inlet pipe section is formed with capillary passages.

The advantage of the apparatus in accordance with the invention is that the comparatively cold first water reaching the receptacle is discharged to the receiving jug via the by-pass duct. Consequently, this water does not come into contact with the ground coffee. As the process continues the temperature of the water flowing into the receptacle increases continually. As a result of this, the housing of the receptacle is warmed up. Since per unit of time more water is fed to the receptacle than is discharged via the by-pass duct, the water level in the receptacle rises until the siphon device becomes operative. The water temperature is then nearly optimal. The siphon device now rapidly siphons nearly all the water from the receptacle to the filter space with the ground coffee. The ground coffee is thus wetted in a comparatively short time. Owing to the capillary inlet passages of the siphon device the siphon action will not cease as long as water is supplied to the receptacle, not even when this supply is temporarily interrupted. This is described in GB-A-2,134,376. The newly supplied hot water is siphoned directly to the ground coffee. It is evident that this also reduces the contact time.

Preferably, the inlet opening of the by-pass duct is situated at a higher level than the capillary passages of the siphon device. As a result of this, hardly any more water will flow through the by-pass duct after the first amount of water has been siphoned to the filter space.

A preferred embodiment is characterized in that the receptacle is constructed as a cover for the filter holder, which results in a compact construction.

The invention will now be described in more detail with reference to the drawing, which shows an embodiment by way of example. In the drawing

Figure 1 shows diagrammatically a coffee-maker, and

Figure 2 is s cross-sectional view of a filtering device with receptacle and siphon device.

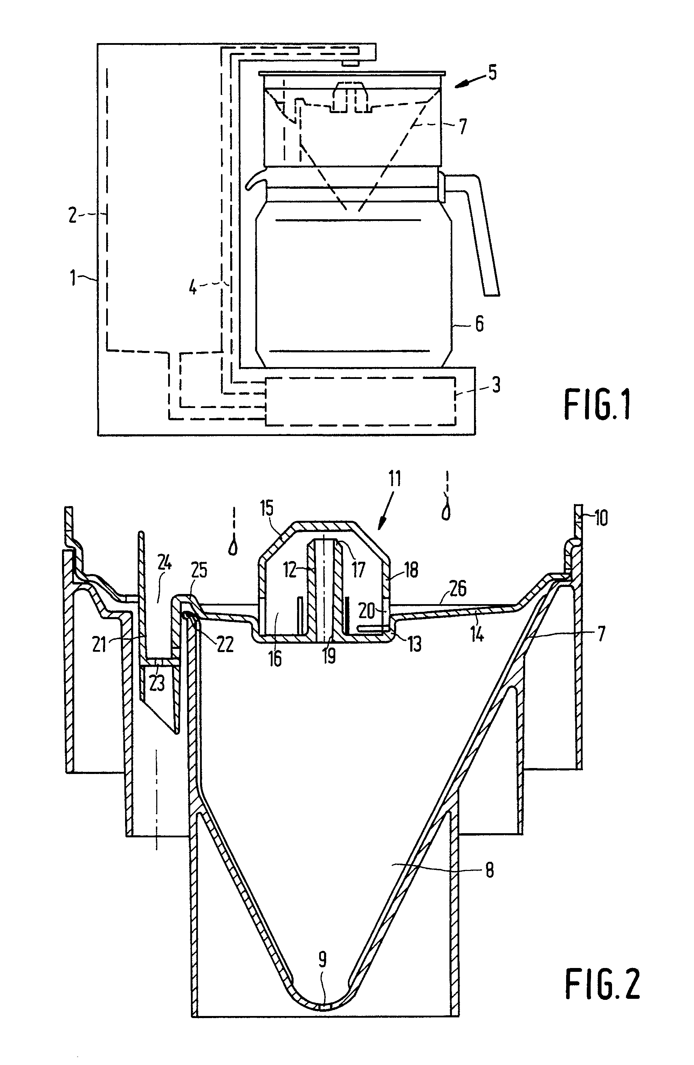

The coffee-maker shown in Fig. 1 comprises a housing 1 with a water reservoir 2. The housing accommodates a flow heater 3, which heats the water from the water reservoir 2 and subsequently conveys it to a filtering device 5 through a riser pipe 4. The filtering device can be placed on a receiving jug 6, preferably a thermally insulated jug. The filtering device comprises a filter holder 7 with a filter space 8, in which a paper filter for the ground coffee can be placed. An outlet opening 9 is situated in the lower part of the filter holder. A receptacle 10 is arranged above the filtering device. In the present example the receptacle is constructed as the cover of the filter holder 7. The receptacle is provided with a siphon device 11 constituted by an outlet pipe section 12, which extends upwardly from a recess 13 in the bottom 14 of the receptacle, and a sleeve 15, which surrounds the pipe section 12, thereby forming a passage 16 for the liquid between the pipe section 12 and the sleeve 15. The upper side of the sleeve above the open end 17 of the pipe section 12 is closed and at its lower side the sleeve has an inlet pipe section 18, which engages in the recess 13 in the bottom 14 of the receptacle. An outlet opening 19 is formed in the bottom of the recess 13 at the lower end of the pipe section 12. The lower part of the inlet pipe section 18 of the sleeve 15 is formed with a plurality of capillary inlet passages 20 in the longitudinal direction of the pipe section 18.

The receptacle 10 has a by-pass duct 21. This duct is situated adjacent the filter space 8 and projects through an opening 22 in the housing of the filter holder 7. The by-pass duct 21 has passage 23 which is dimensioned in such way that the amount of water supplied to the receptacle 10 per unit of time is larger than the amount of water discharged through the by-pass duct. An inlet opening 24 of the by-pass duct is situated at a higher level than the capillary inlet passages 20 of the siphon device 11.

The filtering device operates as follows.

The flow heater 3 conveys water to the filtering device 5, which water is first collected in the receptacle 10. However, the first amount of water being conveyed is comparatively cold, because this water, which is present in the riser pipe 4 when the preparation process begins, has not been heated by the flow heater 3. The water which flows subsequently into the receptacle rises continually in temperature and mixes with the colder water, but this mixture is in fact not warm enough for use in the filtering process. Moreover, the first hot water is also used for warming up the housing of the receptacle. The water in the receptacle rises gradually and after some time it flows over an edge 25 of the inlet opening 24 of the by-pass duct 21 to the collecting jug 6. Consequently, this water does not partake in the filtering process. Since the passage 23 of the by-pass duct has been dimensioned in such a way that the amount of water flowing to the receptacle is larger than the amount of water flowing to the collecting jug through the by-pass duct, the water level in the receptacle will rise. The water temperature also rises continually. When the water reaches the open end 17 of the pipe section 12 the water is siphoned to the filter space 8 and the actual filtering process begins. The water level drops rapidly to substantially the level 26. However, owing to the capillary inlet passages 20 water will remain in the passage 16, so that siphoning continues. The water level 26 is below the edge 25 of the inlet opening 24 of the by-pass duct 21, so that no more hot water flows through the by-pass duct.

Thus, the filtering device, the siphon device and the by-pass duct ensure that the comparatively cold first amount of water does not partake in the filtering process but only the subsequently heated water. The filtering process is performed at a higher more optimum temperature, which has a favourable effect on the coffee flavour. Obviously, the invention may also be applied to, for example, a tea-maker.

## Claims

1. An apparatus for preparing hot beverages, such as coffee and tea, which apparatus comprises a housing (1), a water reservoir (2), a filtering device (5) having a filter holder (7) with a filter space (8), a flow heater (3) for heating and conveying water from the water reservoir to the filtering device, a receptacle (10) for hot water, which receptacle can be placed above the filtering device, and a siphon device (11) with an inlet pipe section (18) and an outlet pipe section (12), a lower rim of the inlet pipe section being disposed on a bottom (14) of the receptacle (10) and the outlet pipe section discharging above the filter space (8), characterized in that the receptacle (10) is provided with a by-pass duct (21) which terminates adjacent the filter space (8) and whose passage (23) is dimensioned in such a way that the amount of water supplied to the receptacle per unit of time is larger that the amount of water discharged by the by-pass duct, and the lower part of the inlet pipe section (18) is formed with capillary passages (20).

2. An apparatus as claimed in Claim 1, characterized in that an inlet opening (24) of the by-pass duct (21) is situated at a higher level than the capillary passages (20) of the siphon device (11).

3. An apparatus as claimed in Claim 1 or 2, characterized in that the receptacle (10) is constructed as a cover for the filter holder (7).

FIG.1

FIG.2

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | DE-U-7 811 283  (SUDDEUTSCHE METALLWERKE GMBH)<br>* page 4, line 15 - page 8, line 21; figures * *<br>— — — | 1,3 | A 47 J 31/057<br>A 47 J 31/06 |
| D,A | GB-A-2 134 376  (PHILIPS GLOEILAMPENFABRIEKEN NV)<br>* the whole document * *<br>— — — | 1 | |
| A | US-A-4 056 050  (BROWN)<br>* column 6, line 14 - line 53; figures 1,2 * *<br>— — — | 1-3 | |
| A | EP-A-0 294 579  (MELITTA-WERKE BENTZ & SOHN)<br>* the whole document * *<br>— — — — — | 1 | |

TECHNICAL FIELDS
SEARCHED (Int. Cl.5)

A 47 J

The present search report has been drawn up for all claims

| Place of search | Date of completion of search | Examiner |
|---|---|---|
| The Hague | 01 August 91 | BODART P.A. |